# EUROPÄISCHE PATENTANMELDUNG

(11) **EP 1 820 403 A1**
(43) Veröffentlichungstag der Anmeldung: **22.08.2007**
(21) Anmeldenummer: 07003369.1
(22) Anmeldetag: 17.02.2007
(51) Int. Cl.: A22B 5/04, A22B 7/00

(54) **Verfahren und Vorrichtung zur Ortverlagerung eines Schlachttierkörpers mittels eines Fahrzeugs**

(30) Priorität: 17.02.2006 DE 102006007851
(71) Anmelder: Maier, Annette, 72336 Balingen (DE)
(72) Erfinder: Maier, Ernst Hermann, 72336 Balingen (DE)
(74) Vertreter: Gleiss, Alf-Olav

(57) **Zusammenfassung**

Die Erfindung betrifft ein Verfahren zur Verbringung eines Schlachttierkörpers in den Schlachthof, umfassend die Schritte Betäuben, insbesondere durch schallgedämpftes Schießen des Schlachttieres in seiner gewohnten Umgebung, insbesondere auf einer Weide; Aufnehmen in einer Vorrichtung zur Ortsverlagerung eines Schlachttierkörpers (1), nämlich Positionieren der Vorrichtung in unmittelbarer Nähe des betäubten Schlachttieres; Befestigen des Schlachttieres an einer Aufnahmevorrichtung (103); Einkippen der Aufnahmevorrichtung (103) mit der Folge, dass das Schlachttier in die Aufnahmevorrichtung (103) übernommen wird; Stechen des Schlachttieres; Beginn des Ausblutens; Schließen der Aufnahmevorrichtung; Transportieren des ausblutenden Schlachttieres zum nächstgelegenen Schlachthof. Die Erfindung betrifft weiter eine Vorrichtung zur Ortsverlagerung eines Schlachttierkörpers (1) mittels eines Fahrzeugs. Es sind eine Ausblutevorrichtung (29) und eine Aufnahmevorrichtung (103) vorgesehen.

## Beschreibung

Zur Fleischproduktion werden Schlachttiere oft über größere Entfernungen zu zentralen Schlachthöfen oder auch zu kleineren, dezentralisierten Schlachthöfen transportiert, wo sie entsprechend den gesetzlichen Vorschriften getötet, geschlachtet und zumindest teilweise weiterverarbeitet werden. Es hat sich hierbei gezeigt, dass Schlachttiere durch den Transport, der häufig in größeren Einheiten erfolgt, sowie durch die Verbringung in den unmittelbaren Bereich des Schlachthofes einem sehr erheblichen Stress ausgesetzt werden. Diese Phase ist nicht nur für das Tier sehr unangenehm, sondern beeinträchtigt durch den Ausstoß von Stresshormonen im Tierkörper auch die Fleischqualität.

Im Wege artgerechter Tierhaltung hat es sich nun eingebürgert, Schlachttiere auf größeren Weideflächen, in Laufhöfen, Laufställen oder in befahrbaren Stallungen und hierbei freilaufend zu halten, was einer gesunden Entwicklung der Tiere und der Ausbildung von qualitativ hochwertigem Fleisch förderlich ist. Es stellt sich hierbei die Aufgabe, die Tiere aus dieser Haltung heraus in einer geeigneten Weise zum Schlachthof zu transportieren. Die Tiere müssen von der Herde vereinzelt werden, und sollen beim Transport zum Schlachthof keinem Stress ausgesetzt werden. Es ist mittlerweile gängig, Tiere einzufangen und in eine Einzeltransportbox oder einen Transportanhänger zu verbringen, um die Tiere auf diese Weise zum Schlachthof zu transportieren. Hierbei wird aber ein Teil der Vorzüge dieser Haltungsformen insoweit wieder zunichte gemacht, als dass die Tiere sowohl beim Einfangen als auch bei der Annäherung an einen Schlachthof sehr wohl bemerken, was ihnen bevorsteht, und es doch noch zur Ausschüttung von Stresshormonen kommt.

Diese Probleme lassen sich erfindungsgemäß dadurch lösen, dass das Tier auf der Weide, in einem Laufhof, einem Laufstall oder in einer befahrbaren Stallung in seiner gewohnten Umgebung betäubt wird, beispielsweise durch einen Schuss auf kurze Distanz aus einem hierfür zugelassenen, geeigneten Gewehr, das vorzugsweise mit einem Schalldämpfer ausgerüstet ist, einem Bolzenschußgerät oder auf eine andere geeignete Weise, es in die erfindungsgemäße Vorrichtung aufgenommen und dort gestochen wird, wobei es zu einem Ausbluten während des Transports zum Schlachthof kommt, der in der erfindungsgemäßen Vorrichtung erfolgt.

Hierzu ist ein Verfahren vorgesehen, das folgende Schritte umfasst: Betäuben, insbesondere durch schallgedämpftes Schießen des Schlachttieres in gewohnter Umgebung, insbesondere auf einer Weide; Aufnehmen in eine Transport- und Ausblutevorrichtung, nämlich Positionieren der Vorrichtung in unmittelbare Nähe des betäubten Schlachttieres, Befestigen des Schlachttieres an der Aufnahmevorrichtung, Einkippen der Aufnahmevorrichtung mit der Folge, dass das Schlachttier in die Aufnahmevorrichtung übernommen wird; Stechen des Schlachttieres und Beginn des Ausblutens; Schließen der Aufnahmevorrichtung; Transportieren des ausblutenden Schlachttieres zum nächstgelegenen Schlachthof.

Das Schlachttier wird von dem betäubenden Schuß beziehungsweise einer anderen Betäubung demzufolge in seiner gewohnten Umgebung überrascht; bis zum letzten Moment ist es völlig arglos und frei von Streß und Todesangst. Durch die Verwendung beispielsweise einer schallgedämpften Waffe wird auch die übrige Herde nicht verschreckt, so dass auch hier keinerlei Lerneffekt eintritt, der das Auftauchen bestimmter Personen oder Vorrichtungen auf der Weide dem (möglichen) Ableben eines der Tiere zuordenbar macht. Die schnelle Aufnahme des betäubten Schlachttieres mittels der Aufnahmevorrichtung und das umgehende Stechen des Schlachttieres und der sofort erfolgende Transport zum Schlachthof lassen den Eingriff in die Herde sehr kurz werden, so dass die Herde keinerlei Argwohn aufbaut und auch das Schlachttier selbst in möglichst schonender Weise betäubt und getötet wird. Das Verfahren kann von einem einzelnen Menschen ausgeführt werden, insbesondere von einem solchen, der der Herde vertraut ist, so dass auch nicht das Auftauchen fremder Personen den Argwohn der Herde erweckt.

Zur Verwirklichung dieses Verfahrens ist eine Vorrichtung zur Ortsverlagerung eines Schlachttierkörpers mittels eines Fahrzeugs vorgesehen, das eine Ausblutevorrichtung und eine Aufnahmevorrichtung aufweist. Eine Ausblutevorrichtung ist hierbei eine Vorrichtung, die das aus dem Tier nach dem Stechen austretende Tierblut aufnimmt und ein Austreten aus der Vorrichtung verhindert. Eine Aufnahmevorrichtung ist eine Vorrichtung, die es dem Bediener gestattet, den betäubten Schlachttierkörper in die Vorrichtung zur Ortsverlagerung einzubringen. Schlachttiere, insbesondere Rinder, sind relativ zu den Kräften eines Menschen sehr schwer, so dass sich ein Mensch zur Umlagerung, insbesondere zur Aufnahme eines Schlachttierkörpers in eine Vorrichtung zur Ortsverlagerung mechanischer Hilfsmittel bedienen muss. Hierzu ist vorliegend mindestens ein Hebezeug vorgesehen, das an der Vorrichtung zur Ortsverlagerung angeordnet ist, und mit dem beispielsweise die Beine des betäubten Schlachttieres gefasst und dieses in eine zur Aufnahme in die Vorrichtung geeignete Lage gebracht werden können; darüber hinaus erlaubt das Hebezeug die sinnvolle Positionierung des Schlachttierkörpers innerhalb der Vorrichtung.

In einer weiteren Ausführungsform ist vorgesehen, dass die Aufnahmevorrichtung zumindest teilweise selbstwirkend ist. Hiermit ist gemeint, dass über das Anseilen/Anbinden des Schlachttierkörpers an einem Hebezeug beziehungsweise an der Vorrichtung zur Ortsverlagerung hinaus vom Bediener keine weiteren Ortsverlagerungshandlungen vorgenommen werden müssen. Dies wird in einer bevorzugten Ausführungsform dadurch bewirkt, dass die Aufnahmevorrichtung eine Kippeinrichtung aufweist. Hierdurch ist es möglich, die in Normal- beziehungsweise Transportstellung im Wesentlichen vertikal stehende Vorrichtung abzukippen, so dass diese weitgehend über dem Schlachttierkörper positioniert werden kann. Mittels des bereits beschriebenen Hebezeugs werden die Beine des Schlachttieres angehoben und in eine innerhalb der Vorrichtung oben gelegene Position gebracht, so dass beim Rückkippen der Vorrichtung der Schlachttierkörper gewissermaßen von selbst in die Vorrichtung eingebracht wird. Hierdurch ist es auch nicht erforderlich, die Hebezeuge beziehungsweise deren Antrieb besonders kräftig auszubilden, da die eigentliche Hebewirkung durch das Einkippen bewirkt wird. Näheres ergibt sich aus den Figuren und ihrer Beschreibung. Hierbei werden die Hebe- und Schwenkgesetze ausgenutzt, so dass die Handlungen des Bedieners auf ein Mindestmaß begrenzt werden können und die Einbringung des Schlachttierkörpers in die Vorrichtung sehr zügig von statten geht. Dies ist allein schon deshalb wichtig, da das betäubte Tier relativ rasch gestochen und nach dem Stechen sehr zügig zum nächstgelegenen Schlachthof transportiert werden muss.

In einer bevorzugten Ausführungsform ist vorgesehen, dass die Vorrichtung geschlossene und/oder schließbare Seitenwände aufweist. Diese gestatten es, den Schlachttierkörper auch während des Transports den Blicken der Öffentlichkeit praktisch vollständig zu entziehen. Ferner werden hierdurch Eingriffe von Außen und Manipulationen verhindert. Weiter bewirken geschlossene Seitenwände eine Versteifung und damit Stabilisierung der Vorrichtung.

In einer bevorzugten Ausführungsform ist vorgesehen, dass die Vorrichtung eine Aufnahmeöffnung aufweist, die durch eine Verschlusseinrichtung verschlossen werden kann. Mit Aufnahmeöffnung ist der Bereich der Vorrichtung gemeint, durch den der Schlachttierkörper in die Vorrichtung eingebracht wird, mithin also diejenige, die bei Verwendung der Kippeinrichtung über den Schlachttierkörper abgekippt wird und im Wesentlichen über diesem zum Liegen kommt. Eine solche Öffnung ist erforderlich, um den Schlachttierkörper überhaupt in die Vorrichtung einbringen zu können. Für einen vollständigen Verschluss der Vorrichtung, insbesondere während des Transports des gestochenen Schlachttieres zum Schlachthof, ist daher die Verschlusseinrichtung vorgesehen, die die Aufnahmeöffnung vollständig oder zumindest im Wesentlichen vollständig verschließt.

In einer bevorzugten Ausführungsform ist vorgesehen, dass die Verschlusseinrichtung als Rollladen, als Jalousie oder als Rollo ausgebildet ist. Rollladen, Jalousien oder Rollos lassen sich leicht und mit relativ kleinem Bauraum herstellen, so dass die Aufnahmeöffnung nicht unnötig durch die Verschlusseinrichtung behindert wird. Insbesondere werden sperrige Klappen und Ähnliches vermieden, die beim Aufnehmen des Schlachttierkörpers in die Vorrichtung hinderlich sein könnten.

In einer weiteren Ausführungsform ist vorgesehen, dass der Aufnahmeöffnung im Wesentlichen gegenüberliegend eine Sichtöffnung angeordnet ist. Eine solche Sichtöffnung gestattet die Benutzung der Vorrichtung durch einen einzigen Bediener, da er beim Rangieren mit dem Fahrzeug durch die Sichtöffnung und die Aufnahmeöffnung den Schlachttierkörper sehen und somit auf Anhieb eine korrekte Positionierung der Vorrichtung in unmittelbarere Nähe des Schlachttierkörpers vornehmen kann, so dass ein Aufnehmen des Schlachttierkörpers in die Vorrichtung ohne weitere Verlagerungen entweder des Schlachttierkörpers oder des Fahrzeugs mit der Vorrichtung erforderlich sind und auch kein Einweisen durch eine weitere Person erforderlich ist.

In einer bevorzugten Ausführungsform ist vorgesehen, dass die Sichtöffnung verschließbar ist. Auch dies gestattet den vollständigen Verschluss der Vorrichtung und entzieht den ausblutenden Schlachttierkörper während des Transports den Blicken der Öffentlichkeit.

In einer bevorzugten Ausführungsform ist vorgesehen, dass die Vorrichtung ein wannenförmiges Bodenelement aufweist. Dieses gestattet den Transport auch von anderen Gegenständen, unter Anderem auch von Futtermitteln, so dass die Tiere die Vorrichtung nicht ohne Weiteres mit dem Verschwinden oder gar dem Tod eines Artgenossen assoziieren, und ein Lerneffekt der Herde in dieser Hinsicht ausbleibt. Sinnvollerweise wird die Vorrichtung nämlich auch zum Transport von Futtermittel und Ähnlichem verwendet, so dass sie mit den Tieren positiv assoziiert wird. Hierdurch können nachhaltig Angstreaktionen der Herde bei Anblick der Vorrichtung vermieden werden. Insbesondere wird so vermieden, dass ein immer gleicher Geschehensablauf bei Anblick der Vorrichtung erinnert wird.

In einer besonders bevorzugten Ausführungsform ist vorgesehen, dass die Ausblutevorrichtung das wannenförmige Bodenelement ist. Mit einem einzigen Bauteil lassen sich die Vorzüge, die für das wannenförmige Bodenelement oben beschrieben wurden, und der Ausblutevorrichtung vereinigen.

In einer weiteren bevorzugten Ausführungsform ist vorgesehen, dass das wannenförmige Bodenelement als Mehrzweckwanne ausgebildet ist. Eine Mehrzweckwanne ist eine solche, die universell für verschiedenartige Transporte und Fassung von Gegenständen, gleich ob flüssiger oder fester Form, verwendbar ist. Insbesondere kann sie auch entnehmbar ausgestaltet sein.

Weiter ist vorgesehen, dass die Vorrichtung an eine landwirtschaftliche Maschine, insbesondere einen Traktor, angekoppelt werden kann. Traktoren sind in jedem landwirtschaftlichen Betrieb vorhanden, so dass die Vorrichtung lediglich als solche gebaut und vom Bediener erworben werden muss, er zum Zwecke des Transports aber vorhandene Fahrzeuge, insbesondere nämlich Traktoren, verwenden kann.

Hierzu ist insbesondere vorgesehen, dass die Ankoppelung über eine Dreipunktaufnahme des Traktors erfolgt. Dreipunktaufnahmen sind im Stand der Technik aller Traktoren vorgesehen, um am rückwärtigen Ende des Traktors eine Vielzahl von Einrichtungen, beispielweise Pflüge, Eggen und anderes landwirtschaftliches Gerät, anzukoppeln und über Vorrichtungen, die im und am Traktor vorgesehen sind, in ihrer relativen Lage zum Traktor und zum Erdboden zu verändern, insbesondere nämlich auch in der Höhe.

In einer bevorzugten Ausführungsform ist vorgesehen, dass die Kippeinrichtung bei Ankoppelung an die Dreipunktaufnahme durch einen Hydraulikzylinder bewirkt beziehungsweise betätigt wird. Der Hydraulikzylinder bewirkt eine Längenveränderung des ihn aufweisenden, zur Ankoppelung dienenden Elementes, vorzugsweise des Oberlenkers. Bei gleicher Länge der Unterlenker der Dreipunktaufnahme bildet sich an den Anlenkpunkten der Unterlenker an die Vorrichtung Verschwenkpunkte aus, so dass bei einer durch den Hydraulikzylinder bewirkten Längenänderung um diese Punkte ein Kippen/Verschwenken der Vorrichtung erfolgt, wobei ihre Oberseite zum Traktor hin beziehungsweise vom Traktor weg verschwenkt wird.

In einer besonders bevorzugten Ausführungsform ist vorgesehen, dass der Hydraulikzylinder doppeltwirkend ausgeführt ist. Das Vor- und Zurückschwenken der Kippvorrichtung kann somit durch ein einziges Bauteil, nämlich den doppeltwirkenden Hydraulikzylinder, erfolgen. Sinnvollerweise wird zu seiner Betätigung die am Traktor ohnehin vorhandene Hydraulikpumpe verwendet.

In einer anderen Ausführungsform ist vorgesehen, dass die Ankoppelung an einen Traktor über einen Frontlader oder Frontladerteile erfolgt. Die Vorrichtung weist hierzu Ankoppelungspunkte auf, die die Verbindung mit den Einrichtungen eines Frontladers gestatten, wobei die oben zur Dreipunktaufnahme beschriebene Kippeinrichtung hier durch Elemente des Frontladers bewirkt wird. Erfindungswesentlich ist hierbei, dass die bodennäheren Ankoppelungselemente der Vorrichtung relativ zu den bodenferneren nicht oder nur wenig Längenänderung erfahren, so dass ein Kippen der Vorrichtung mit der die Aufnahmeöffnung aufweisenden Seite vom Traktor weg und wieder zum Traktor hin erfolgen kann. Durch die Vielzahl der möglichen Frontladertypen ist hier im Einzelfall eine Anpassung an den jeweiligen Typ vorzunehmen.

Weiter ist vorgesehen, dass die Vorrichtung mindestens eine Sterilbox umfasst. Eine Sterilbox ist ein umschlossenes, von einem Bediener öffnenbares Behältnis, dessen Innenraum entsprechend den gesetzlichen Vorschriften keimfrei ist, und das insbesondere mindestens ein Messer oder weitere Werkzeuge zum Stechen des Schlachttieres aufnehmen kann. Aufgrund der gesetzlichen Vorschriften darf das Stechen des Schlachttieres nur mit keimfreien Werkzeugen erfolgen. Eine Anordnung einer solchen Sterilbox an der Vorrichtung beziehungsweise im Inneren der Vorrichtung, nahe der Stelle, an der das Tier zu stechen ist, ist insoweit außerordentlich sinnvoll, da dies dem Bediener das Hantieren mit externen, eigenständigen sterilen Aufbewahrungsvorrichtungen erspart und das erforderliche Werkzeug sehr schnell griffbereit zur Hand ist. Dies ist insbesondere dann erforderlich, wenn von der Aufnahme des Schlachttieres in die Vorrichtung nicht unnötig Zeit vergehen soll oder darf.

In einer weiteren bevorzugten Ausführungsform ist vorgesehen, dass die Vorrichtung eine Waschvorrichtung für den Bediener umfasst. Dem Bediener wird es dadurch ermöglicht, sich unmittelbar nach dem Stechen des Tieres zumindest grob vom Blut zu reinigen und somit ohne Blut- oder Schmutzanhaftungen die Fahrt zum Schlachthof durchführen zu können. Dies ist insbesondere dann wichtig, wenn nur ein Bediener für die Aufnahme des Schlachttieres in die Vorrichtung und den anschließenden Transport zum Schlachthof vorgesehen ist. Eine solche Waschvorrichtung kann im einfachsten Falle aus einem an der Vorrichtung montierten Wasserkanister mit Auslaufvorrichtung (beispielsweise einem Absperrventil oder einen Hahn) bestehen, wobei vorzugsweise aber auch eine Auffangvorrichtung für verunreinigtes Wasser vorgesehen wird, wobei diese ebenfalls aus einem Kanister mit einer entsprechenden Einlaufvorrichtung, beispielsweise einer becken- oder trichterförmigen Ausgestaltung, vorgesehen ist.

Die Erfindung wird nachfolgend anhand von Figuren näher erläutert.

Es zeigen
- Figur 1: eine Vorrichtung zur Verbringung eines Schlachttierkörpers an einem Traktor,
- Figur 2: die selbe Vorrichtung in einer Position zur Aufnahme des Schlachttierkörpers, und
- Figur 3: eine Querschnittsaufsicht auf die Vorrichtung.

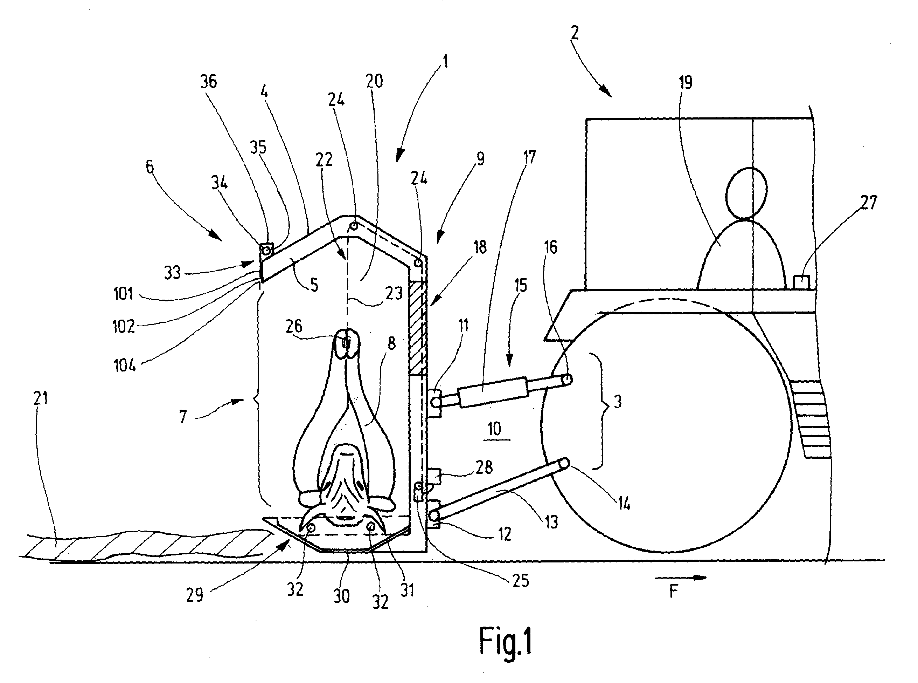

Figur 1 zeigt eine Vorrichtung zur Ortsverlagerung eines Schlachttierkörpers 1, die an einem Traktor 2 über dessen nur symbolisch dargestellte Dreipunktaufnahme 3 angekoppelt ist. Die Vorrichtung 1 besteht aus einem stabilen Rahmen 4, der beispielsweise aus Metallprofilen 5 gefertigt ist. Der Rahmen 4 hat im weitesten Sinne, im Querschnitt betrachtet, die Kontur eines großen, umgedrehten C. Er weist an einer dem Traktor 2 abgewandten Aufnahmeseite 6 eine Aufnahmeöffnung 7 auf. Selbstverständlich kann der Rahmen 4 auch die Form eines geschlossenen Rahmens haben, insbesondere also an allen Eckpunkten ein Metallprofil 5 aufweisen. Wichtig ist hierbei lediglich, dass auf der Aufnahmeseite 6 die Aufnahmeöffnung 7 in einer solchen Größe ausgebildet ist, dass ein aufzunehmender Schlachttierkörper 8 ungehindert durchtreten kann, mithin die lichte Weite der Aufnahmeöffnung 7 sowohl in Längs- als auch in Quererstreckung ausreichend groß dimensioniert ist, um den Durchtritt des Schlachttierkörpers 8 zu ermöglichen. Auf der der Aufnahmeöffnung 7 gegenüberliegenden Seite 9 ist in diesem Ausführungsbeispiel eine Dreipunktankupplung 10 angeordnet, die aus einem oberen Anlenkpunkt 11 und zwei unteren Anlenkpunkten 12 besteht, von denen vorliegend aufgrund der Perspektive nur der rechte sichtbar ist. Mittels jeweils eines Unterlenkers 13 werden beide unteren Anlenkpunkte 12 an die unteren Befestigungspunkte 14 des Traktors 2 angekoppelt. Vom oberen Anlenkpunkt 11 ausgehend wird über einen Oberlenker 15 die Vorrichtung an einen oberen Befestigungspunkt 16 des Traktors 2 angekoppelt. Der Oberlenker 15 ist hierbei bevorzugt als ein hier nur schematisch dargestellter doppeltwirkender Hydraulikzylinder 17 ausgebildet oder umfasst einen solchen. Die der Aufnahmeöffnung 7 gegenüberliegende Seite 9 weist ferner eine Sichtöffnung 18 auf, die es einem Fahrer 19 des Traktors 2 gestattet, die rückwärtig am Traktor 2 angeordnete Vorrichtung zur Ortsverlagerung eines Tierkörpers 1 nicht nur als solche im Auge zu behalten, sondern auch durch die Sichtöffnung 18 hindurch einen Innenbereich 20 der Vorrichtung zur Ortsverlagerung 1 wie auch durch die Aufnahmeöffnung 7 hindurch ein hinter ihr befindliches Terrain 21. Die Vorrichtung weist weiter mindestens ein Hebezeug 22 auf, das ein Zugseil 23 (oder gegebenenfalls auch feingliedrige Ketten) und Umlenkrollen 24 sowie einen Antrieb 25 aufweist. Das Hebezeug 22 kann als Einzelhebezeug ausgebildet sein, oder bevorzugt als Doppelhebezeug mit separat steuerbaren Antrieben 25 für die linke und rechte Seite der Vorrichtung 1. In der Ausführung als Doppelhebezeug ist es beispielsweise möglich, die Vorderbeine 26 des Schlachttierkörpers 8 weniger weit anzuheben als die nicht dargestellten Hinterbeine, was das Ausbluten erleichtert, weil die üblicherweise am Hals des Schlachttierkörpers 8 gelegene, hier nicht dargestellte Stichstelle hierdurch tiefer liegt.

Über eine Fernbedienungseinheit 27, die mittels nicht dargestellter Verbindungswege, beispielsweise über Kabelverbindung oder über eine Funkverbindung oder durch ähnliche geeignete Signalübertragungswege, mit einer Schalteinheit 28 in Verbindung steht, können die mit der Schalteinheit 28 verbundenen Antriebe 25 des jeweiligen Hebezeugs 22 vom Fahrer 19 des Traktors 2 aus dem Traktor heraus gesteuert werden, ohne dass dieser den Traktor 2 verlassen muss. Vorteilhaft ist die Fernbedienungseinheit 27 transportabel, so dass sie vom Bediener bei der Arbeit mit der Vorrichtung zur Ortsverlagerung eines Schlachttierkörpers 1 mitgeführt werden kann, um beispielsweise auch bereits beim Anbinden des Schlachttierkörpers 8 am Zugseil 23 - also wenn der Bediener nicht auf dem Traktor sitzt - das Hebezeug 22 bedienen zu können. Alternativ oder kumulativ können hierzu weitere - nicht dargestellte - Bedieneinheiten auch direkt an der Vorrichtung zur Ortsverlagerung eines Schlachttierkörpers 1 angeordnet sein.

Die Vorrichtung zur Ortsverlagerung eines Schlachttierkörpers 1 weist weiter eine Ausblutevorrichtung 29 auf, die aus einem wannenförmigen Bodenelement 30 besteht, das als Mehrzweckwanne 31 ausgebildet ist. In Längserstreckung der Ausblutevorrichtung 29 sind, quer zur Fahrtrichtung F des Traktors 2, Stützstreben 32 angeordnet, die zum Einen den Rahmen 4 verstärken und darüber hinaus ein Eintauchen des Schlachttierkörpers 8 in die Ausblutevorrichtung 29 verhindern, in dem sie ihn vor Eintritt in die Mehrzweckwanne 31 abstützen und somit weitestgehend ein Kontakt mit dem in der Mehrzweckwanne 31 gesammelten, hier nicht dargestellten Blut verhindert werden kann.

Die Aufnahmeöffnung 7 weist eine Verschlusseinrichtung 33 auf, die als Rolljalousie 34, nämlich als Rollladen 101, Jalousie 102, Rollo 104 oder eine konstruktive Kombination hieraus, ausgebildet ist und auf einem Jalousiekern 35 innerhalb eines Jalousiekastens 36 angeordnet ist. Die Verschlusseinrichtung 33 lässt sich entweder von Hand mittels geeigneter Vorrichtungen, beispielsweise mittels eines nicht dargestellten Treibrades, eines Seilzuges oder einer Kurbel, oder über einen nicht dargestellten separaten Jalousieantrieb auf- oder abrollen, wobei die Aufnahmeöffnung 7 wahlweise geöffnet oder verschlossen wird. Ein solcher Jalousieantrieb kann ebenfalls mittels geeigneter Verbindungswege entweder über eine separate, nicht dargestellte Fernsteuereinheit oder über die bereits vorhandene Fernsteuereinheit 27 vom Fahrer 19 aus dem Traktor 2 heraus fernbedient werden. Bei der Ausführung der Verschlußeinrichtung 33 als Rollo 104 wird vorteilhaft auch eine übliche, preiswerte Rollokonstruktion mittels federbelastetem Wickelkern eingesetzt, die vom Bediener leicht von Hand zu bedienen ist.

Die Vorrichtung zur Ortsverlagerung eines Schlachttierkörpers 1 weist weiter hier nicht dargestellte, geschlossene oder im Wesentlichen geschlossene beziehungsweise verschließbare Seitenwände auf, so dass bei Verschluss der Aufnahmeöffnung 7 sowie der Sichtöffnung 18 (letztere durch nicht dargestellte Verschlusselemente, die vorzugsweise am Rahmen 4 an der der Aufnahmeöffnung 7 gegenüberliegenden Seite 9 angeordnet sind) ein vollständiger Verschluss des Innenbereichs 20 der Vorrichtung zur Ortsverlagerung eines Schlachttierkörpers 1 möglich ist.

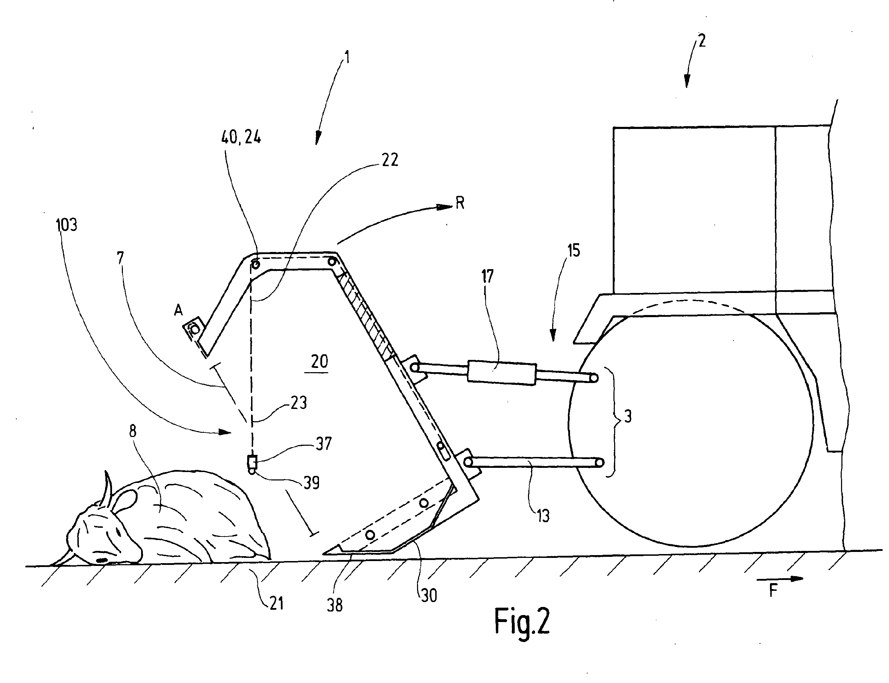

Figur 2 zeigt die Vorrichtung zur Ortsverlagerung eines Schlachttierkörpers 1, die an den Traktor 2 in der vorstehend beschriebenen Art und Weise angekoppelt ist, in Aufnahmestellung A, in die sie mittels des doppeltwirkenden Hydraulikzylinders 17 gebracht wurde. Am Oberlenker 15 wurde die Vorrichtung zur Ortsverlagerung eines Schlachttierkörpers 1 nach hinten, also entgegen der Fahrtrichtung F des Traktors 2, abgekippt, was durch Verlängerung des Oberlenkers 15 relativ zum Unterlenker 13 durch den doppeltwirkenden Hydraulikzylinder 17 erfolgt. Gleichzeitig kann die Dreipunktaufnahme 3 des Traktors 2 zu diesem Zwecke in ihrer Höhe variiert werden, je nach dem, wie dies durch die Anforderungen erforderlich ist. Das Abkippen der Vorrichtung zur Ortsverlagerung eines Schlachttierkörpers 1 bewirkt, dass sich bei geöffneter Aufnahmeöffnung 7 das Zugseil 23, das hier mit einem Fesselpunkt 37 (schematisch) dargestellt ist, aus der Aufnahmeöffnung 7, mithin also aus dem Innenbereich 20 der Vorrichtung zur Ortsverlagerung eines Schlachttiers 1, heraus bewegt. Die gesamte Vorrichtung zur Ortsverlagerung eines Schlachttierkörpers 1 wird mittels des Traktors 2 zuvor so an den Schlachttierkörper 8 herangefahren, dass die Aufnahmeöffnung 7 unmittelbar dem Schlachttierkörper 8 benachbart liegt, wobei das wannenförmige Bodenelement 30 mit seiner rückseitigen Schmalseite 38 annähernd das Niveau des Terrains 21 hat, insbesondere sich nur knapp darüber befindet. Die auf dieser Darstellung nicht sichtbaren Vorder- und Hinterbeine des Schlachttierkörpers werden mit dem Hebezeug 22, insbesondere mit dem am Zugseil 23 angeordneten Fesselpunkt 37, beispielsweise einer geeigneten Schlingvorrichtung 39 umschlungen, und das Hebezeug 22 so in Betrieb gesetzt, dass die Beine des Schlachttierkörpers 8 nunmehr nach oben weisen und zu einem ersten Umlenkpunkt 40, der durch eine der Umlenkrollen 24 gebildet wird, hingezogen werden. Sobald sich der Schlachttierkörper 8 in dieser Position befindet, wird der doppeltwirkende Hydraulikzylinder derart betätigt, dass sich der Oberlenker 15 insgesamt verkürzt, die Vorrichtung zur Aufnahme eines Schlachttierkörpers 1 also eine Bewegung in Richtung R macht, sich hierbei aufrichtet und in eine im Wesentlichen lotrechte Lage gerät. Hierdurch wird selbstwirkend die Einbringung des Tierkörpers 8 in den Innenbereich 20 der Vorrichtung zur Aufnahme eines Tierkörpers 1 bewerkstelligt. Dieser Mechanismus umschreibt eine Aufnahmevorrichtung 103.

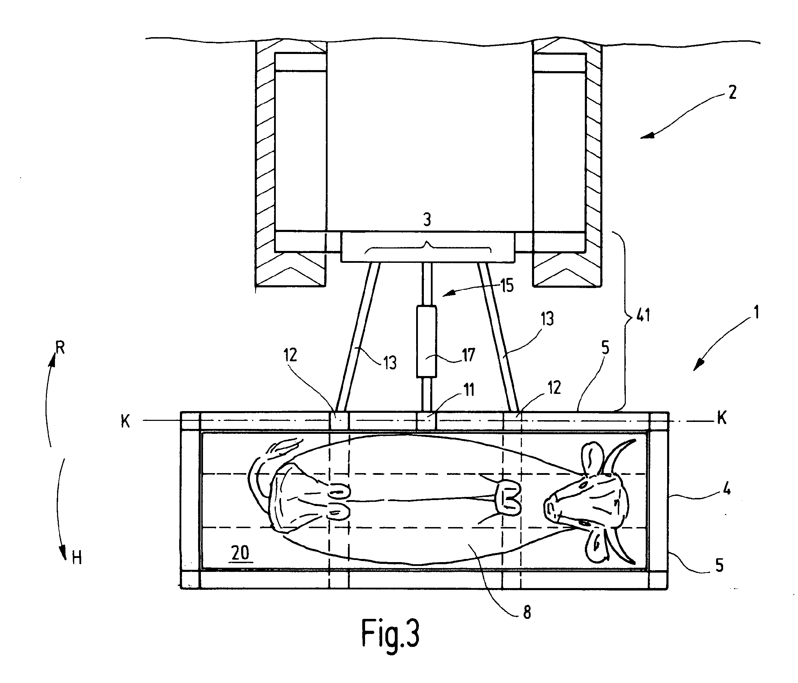

Figur 3 zeigt die Vorrichtung zur Ortsverlagerung eines Tierkörpers, die über die Dreipunktaufnahme 3 des Traktors 2 an diesen angekuppelt ist, wobei die Dreipunktsaufnahme 3, der Oberlenker 15 mit dem doppeltwirkenden Hydraulikzylinder 17 und den beiden Unterlenkern 13 im Zusammenwirken mit dem oberen Anlenkpunkt 11 sowie den unteren Anlenkpunkten 12 eine Kippeinrichtung 41 ausbilden. Wie bereits vorstehend zu Figur 2 beschrieben, bewirkt der doppeltwirkende Hydraulikzylinder 17 das Kippen der Kippeinrichtung 41, wobei die unteren Anlenkpunkte 12 als Drehpunkte einer Kippachse K fungieren, um die die Vorrichtung 1 in Richtung H (vom Traktor 2 weg) beziehungsweise in Richtung R (zum Traktor 2 hin) gekippt werden kann. Die unteren Anlenkpunkte 12 sind ebenso wie der obere Anlenkpunkt 11 mit dem aus Metallprofilen 5 gebildeten Rahmen 4 verbunden.

Aufgrund der Querschnittsdarstellung nicht dargestellt sind die Hebezeuge 22, mittels derer der Schlachttierkörper 8 zur Aufnahme in die Vorrichtung 1 und innerhalb des Innenbereichs 20 der Vorrichtung zur Ortsverlagerung eines Schlachttierkörpers 1 positioniert wird.

### BEZUGSZEICHENLISTE

- 1: Vorrichtung zur Ortsverlagerung eines Schlachttierkörpers
- 2: Traktor
- 3: Dreipunktaufnahme
- 4: Rahmen
- 5: Metallprofil
- 6: Aufnahmeseite
- 7: Aufnahmeöffnung
- 8: Schlachttierkörper
- 9: gegenüberliegende Seite
- 10: Dreipunktaufnahme
- 11: oberer Anlenkpunkt
- 12: unterer Anlenkpunkt
- 13: Unterlenker
- 14: unterer Befestigungspunkt
- 15: Oberlenker
- 16: oberer Befestigungspunkt
- 17: doppeltwirkender Hydraulikzylinder
- 18: Sichtöffnung
- 19: Fahrer
- 20: Innenbereich
- 21: Terrain
- 22: Hebezeug
- 23: Zugseil
- 24: Umlenkrolle
- 25: Antrieb
- 26: Vorderbeine
- 27: Fernbedienungseinheit
- 28: Schalteinheit
- 29: Ausblutevorrichtung
- 30: wannenförmiges Bodenelement
- 31: Mehrzweckwanne
- 32: Stützstreben
- 33: Verschlusseinrichtung
- 34: Rolljalousie
- 35: Jalousiekern
- 36: Jalousiekasten
- 37: Fesselpunkt
- 38: rückseitige Schmalseite
- 39: Schlingvorrichtung
- 40: erster Umlenkpunkt
- 41: Kippeinrichtung
- 101: Rollladen
- 102: Jalousie
- 103: Aufnahmevorrichtung
- 104: Rollo

- F: Fahrtrichtung
- A: Aufnahme-Stellung
- R: Richtung
- K: Kippachse
- H: Richtung

## Patentansprüche

1. Verfahren zur Verbringung eines Schlachttierkörpers (8) in den Schlachthof, umfassend die Schritte Betäuben, insbesondere durch schallgedämpftes Schießen, des Schlachttieres in seiner gewohnten Umgebung, insbesondere auf einer Weide; Aufnehmen in eine Vorrichtung zur Ortsverlagerung eines Schlachttierkörpers (1), nämlich Positionieren der Vorrichtung in unmittelbarer Nähe des betäubten Schlachttieres; Befestigen des Schlachttieres an einer Aufnahmevorrichtung (103); Einkippen der Aufnahmevorrichtung (103) mit der Folge, dass das Schlachttier in die Aufnahmevorrichtung (103) übernommen wird; Stechen des Schlachttieres; Beginn des Ausblutens; Schließen der Aufnahmevorrichtung (103); Transportieren des ausblutenden Schlachttieres zum nächstgelegenen Schlachthof.

2. Vorrichtung zur Ortsverlagerung eines Schlachttierkörpers (1) mittels eines Fahrzeugs, **gekennzeichnet durch** eine Ausblutevorrichtung (29) und eine Aufnahmevorrichtung (103).

3. Vorrichtung nach Anspruch 2, **dadurch gekennzeichnet, dass** die Aufnahmevorrichtung (103) mindestens ein Hebezeug (22) umfasst.

4. Vorrichtung nach einem oder mehreren der vorhergehenden Ansprüche, **dadurch gekennzeichnet, dass** die Aufnahmevorrichtung (103) zumindest teilweise selbstwirkend ist.

5. Vorrichtung nach einem oder mehreren der vorhergehenden Ansprüche, **dadurch gekennzeichnet, dass** die Selbstwirkung durch eine Kippeinrichtung (41) bewirkt wird.

6. Vorrichtung nach einem oder mehreren der vorhergehenden Ansprüche, **dadurch gekennzeichnet, dass** sie geschlossene und/oder schließbare Seitenwände aufweist.

7. Vorrichtung nach einem oder mehreren der vorhergehenden Ansprüche, **dadurch gekennzeichnet, dass** sie eine Aufnahmeöffnung (7) aufweist, die durch eine Verschlusseinrichtung (33) verschlossen werden kann.

8. Vorrichtung nach einem oder mehreren der vorhergehenden Ansprüche, **dadurch gekennzeichnet, dass** die Verschlusseinrichtung (33) ein Rollladen (101), eine Jalousie (102) oder ein Rollo (104) ist.

9. Vorrichtung nach einem oder mehreren der vorhergehenden Ansprüche, **dadurch gekennzeichnet, dass** der Aufnahmeöffnung (7) im Wesentlichen gegenüberliegend eine Sichtöffnung (18) angeordnet ist.

10. Vorrichtung nach einem oder mehreren der vorhergehenden Ansprüche, **dadurch gekennzeichnet, dass** die Sichtöffnung (18) verschließbar ist.

11. Vorrichtung nach einem oder mehreren der vorhergehenden Ansprüche, **dadurch gekennzeichnet, dass** sie ein wannenförmiges Bodenelement (30) aufweist.

12. Vorrichtung nach einem oder mehreren der vorhergehenden Ansprüche, **dadurch gekennzeichnet, dass** die Ausblutevorrichtung (29) das wannenförmige Bodenelement (30) ist.

13. Vorrichtung nach einem oder mehreren der vorhergehenden Ansprüche, **dadurch gekennzeichnet, dass** das wannenförmige Bodenelement (30) als Mehrzweckwanne (31) ausgebildet ist.

14. Vorrichtung nach einem oder mehreren der vorhergehenden Ansprüche, **dadurch gekennzeichnet, dass** sie an eine landwirtschaftliche Maschine, insbesondere einen Traktor (2), angekoppelt werden kann.

15. Vorrichtung nach einem oder mehreren der vorhergehenden Ansprüche, **dadurch gekennzeichnet, dass** die Ankopplung über eine Dreipunktaufnahme (3) des Traktors (2) erfolgt.

16. Vorrichtung nach einem oder mehreren der vorhergehenden Ansprüche, **dadurch gekennzeichnet, dass** die Kippeinrichtung (41) bei Ankopplung an die Dreipunktaufnahme (3) durch einen Hydraulikzylinder bewirkt wird.

17. Vorrichtung nach einem oder mehreren der vorhergehenden Ansprüche, **dadurch gekennzeichnet, dass** der Hydraulikzylinder ein doppeltwirkender Hydraulikzylinder (17) ist.

18. Vorrichtung nach einem oder mehreren der vorhergehenden Ansprüche, **dadurch gekennzeichnet, dass** die Ankopplung an einen Traktor (2) über einen Frontlader oder Frontladerteile erfolgt.

19. Vorrichtung nach einem oder mehreren der vorhergehenden Ansprüche, **dadurch gekennzeichnet, dass** die Vorrichtung mindestens eine Sterilbox umfasst.

20. Vorrichtung nach einem oder mehreren der vorhergehenden Ansprüche, **dadurch gekennzeichnet, dass** die Vorrichtung eine Waschvorrichtung für einen Bediener umfasst.
